# EUROPÄISCHE PATENTSCHRIFT

(11) **EP 1 970 116 B1**
(45) Veröffentlichungstag und Bekanntmachung des Hinweises auf die Patenterteilung: **28.05.2014**
(21) Anmeldenummer: 07023003.2
(22) Anmeldetag: 28.11.2007
(51) Int. Cl.: B01D 53/50, B01D 53/60

(54) **Anlage und Verfahren zur Rauchgasreinigung**
Process and plant for flue gas purification
Procédé et installation de purification des gaz de fumée

(30) Priorität: 09.03.2007 EP 07004877
(43) Veröffentlichungstag der Anmeldung: 17.09.2008
(73) Patentinhaber: Hamon Enviroserv GmbH, 45136 Essen (DE)
(72) Erfinder: Moser, Christian, 45359 Essen (DE); Feldkamp, Markus, 46244 Bottrop (DE); Dickamp, Markus, 44894 Bochum (DE)
(74) Vertreter: Krenzel, Joachim

(56) Entgegenhaltungen:
- DE-A1- 3 721 684
- DE-A1- 10 352 638
- DE-A1- 19 752 470
- DE-C1- 19 815 207
- DE-U1- 29 517 698

## Beschreibung

Die vorliegende Erfindung betrifft einen Waschturm für eine Rauchgasreinigungsanlage mit einem Rauchgaseinlass, einem Rauchgasauslass sowie einem Reaktionsbereich zur Reaktion eines den Reaktionsbereich durchströmenden Rauchgases mit einem seewasserbasierten Agens. Darüber hinaus betrifft die Erfindung ein Verfahren zum Betrieb eines Waschturms.

Bei der Nutzung fossiler Brennstoffe, insbesondere im Bereich der Energiegewinnung fallen Abgase mit unerwünschten, oftmals toxischen Stoffen, insbesondere Rauchgase an. Neben unerwünschten, weil insbesondere schädlichen Stäuben fallen beispielsweise Schwefeloxide, Stickoxide und dergleichen an, deren Emission in die äußere Atmosphäre aus gesundheitlichen und ökologischen Gründen gesetzlich beschränkt ist. Die bei der Verbrennung der fossilen Brennstoffe anfallenden Rauchgase werden deshalb einer Reinigung unterzogen, bevor das Gas als Abgas der Atmosphäre zugeführt wird. Hierfür setzt der Stand der Technik Waschtürme der gattungsgemäßen Art ein, mit denen ein Großteil der im unbehandelten Rauchgas enthaltenen Schadstoffe wie Stickoxide, Schwefeloxide, giftige Stäube und dergleichen herausgefiltert werden können. Derartige Rauchgasreinigungsanlagen werden insbesondere bei Kraftwerken, chemischen Anlagen und dergleichen eingesetzt.

Ein wesentlicher Teil der Rauchgasreinigungsanlage ist ein Waschturm, in den das Rauchgas in einem unteren Bereich eingeleitet wird. Dieses durchströmt den Waschturm vertikal nach oben entgegen einer Gravitationskraft und verlässt ihn durch eine im oberen Bereich angeordnete Auslassöffnung. Zwischen den Öffnungen ist im Waschturm ein Reaktionsbereich vorgesehen, in dem mittels entsprechender Düsenanordnungen ein in der Regel flüssiges Agens eingesprüht wird, welches in Reaktion mit dem Abgas tritt. Dabei werden giftige Stoffe gelöst beziehungsweise neutralisiert und vielfach mit dem Agens mitgeführt. Bei gattungsgemäßen Waschtürmen fällt das Agens entgegen der vertikalen Strömungsrichtung des Rauchgases in einen unterhalb der Einführöffnung für das Rauchgas vorgesehenen Sumpf. Von hier wird das Agens teilweise wiederverwendet und teilweise einer Entsorgung zugeführt. Entsprechend dem zu entsorgenden Anteil des Agens wird frisches Agens hinzugefügt. Neben einer vertikalen Durchströmung des Rauchgases im Waschturm sind mittlerweile auch Reinigungsvorrichtungen bekannt, bei denen das Rauchgas im Wesentlichen in horizontaler Richtung durch die Reinigungsvorrichtung geführt wird. Die wesentlichen Funktionen sind jedoch auch bei diesen Vorrichtung wie vorbeschrieben vorgesehen.

Bei dem vorbeschriebenen Reinigungsverfahren enthält das Agens vorzugsweise Stoffe wie Kalziumoxid, Kalziumhydroxid, Kalziumcarbonat, Kalzimhydrogencarbonat, Mischungen hiervon oder dergleichen. Diese reagieren insbesondere mit den sauren Bestandteilen, die aus dem Abgas in das Agens in Lösung eingetreten sind, um diese zu neutralisieren.

Darüber hinaus sind Waschtürme und Verfahren bekannt, bei denen als Agens im Wesentlichen Seewasser oder auch ausschließlich Seewasser zum Einsatz kommt. Bekanntermaßen enthält Seewasser bereits signifikante Anteile an alkalischen beziehungsweise erdalkalischen Stoffen wie Hydrogencarbonate und dergleichen. Damit eignet sich Seewasser per se bereits als Agens zum Einsatz in der Rauchgasreinigung. Kommt Seewasser als Agens zum Einsatz, so ist es erforderlich, verbrauchtes Seewasser aus dem Sumpf des Turms zu entfernen und durch frisches Seewasser zu ersetzen. Bevor das verbrauchte Seewasser jedoch wieder freigesetzt werden kann, ist es erforderlich, dieses in einem separaten Neutralisierungsbecken derart zu behandeln, dass es bedenkenlos wieder freigesetzt werden kann. Neben der Behandlung mit Chemikalien kommt zusätzlich eine Mischung mit frischem Seewasser in Betracht, so dass optimale Bedingungen für eine optionale anschließende Weiterbehandlung, zum Beispiel Begasung realisiert werden können.

Bei dem vorbeschriebenen Stand der Technik erweist es sich als nachteilig, dass aufwändige Einrichtungen zur Behandlung des Seewassers, insbesondere vor der Freisetzung erforderlich sind. Dies erhöht nicht nur den Wartungsaufwand, sondern es erschwert auch den Einsatz von Rauchgasreinigungsanlagen an Standorten mit hohen Anforderungen an die Zuverlässigkeit des Betriebes und hohen Anforderungen hinsichtlich einzuhaltender Grenzwerte.

Es ist deshalb die **Aufgabe** der vorliegenden Erfindung, eine gattungsgemäße Rauchgasreinigungsvorrichtung derart weiterzubilden, dass eine Verbesserung bezüglich der vorgenannten Nachteile erreicht werden kann.

Vorrichtungsseitig wird diese Aufgabe durch eine Rauchgasreinigungsanlage mit einem Waschturm, aufweisend einen Rauchgaseinlass, einen Rauchgasauslass, sowie einen Reaktionsbereich zur Reaktion eines den Reaktionsbereich durchströmenden Rauchgases mit einem seewasserbasierten Agens **gelöst**, welche dadurch gekennzeichnet ist, dass der Waschturm oberhalb eines seewasserdurchströmten Kanals angeordnet ist und das seewasserbasierte Agens aus dem Reaktionsbereich in den seewasserdurchströmten Kanal fällt.

Die Erfindung rückt von der im Stand der Technik üblichen Konstruktion mit einem Sumpf im Waschturm ab und schlägt erstmals vor, diesen durch einen seewasserdurchströmten Kanal zu ersetzen. Hierdurch können sämtliche, mit dem Sumpf in Verbindung stehende Einheiten, wie Umwälzpumpen, Abscheidevorrichtungen und dergleichen aus der Rauchgasreinigungsvorrichtung insbesondere aus dem Waschturm entfernt werden. Bereits die Entfernung dieser Einrichtungen, vorzugsweise der Rückführung in den Reaktionsbereich aus dem Sumpf, führt bereits zu einer deutlichen Verbesserung der Zuverlässigkeit, insbesondere auch weil der anlagentechnische Aufwand deutlich reduziert werden kann. Das den Reaktionsbereich verlassenden Agens fällt in den seewasserdurchströmten Kanal des Waschturms und vermischt sich an dieser Stelle unmittelbar mit frischem Seewasser, so dass optimale Bedingungen für die erforderliche Weiterbehandlung des Seewassers geschaffen werden. Durch geeignete Bestimmung der Volumenströme beziehungsweise Massenströme können eine entsprechende Behandlung und optimale Bedingungen für eine anschließende Weiterbehandlung geschaffen werden. Durch diese Ausgestaltung können darüber hinaus anlagentechnisch aufwändige große Filtereinrichtungen eingespart werden, weil das Seewasser den Kanal ungehindert durchströmen kann. Durch den Kanal kann das mit Agens beaufschlagte Seewasser aus dem Bereich des Waschturms, vorzugsweise im Wesentlichen unmittelbar entfernt werden.

Vorzugsweise ist der Kanal unterhalb des Reaktionsbereichs angeordnet. So kann vorgesehen sein, dass der Kanal direkt unterhalb einer Einführöffnung für das Rauchgas in den Waschturm angeordnet ist. Auf diese Weise kann ein Waschturm mit geringem Platzbedarf erreicht werden. Das Rauchgas durchströmt den Waschturm entgegen der Gravitation von unten nach oben, wie eingangs beschrieben. Im oberen Bereich des Waschturms wird das seewasserbasierte Agens zum Beispiel auf einer oder mehreren Ebenen eingedüst und tritt im Reaktionsbereich mit dem Rauchgas in Wechselwirkung. Die Verfahrensbedingungen sind dabei derart eingestellt, dass das seewasserbasierte Agens eine gewisse vorgebbare Verweildauer im Reaktionsbereich aufweist. Danach sinkt es aufgrund der Gravitationskraft aus dem Reaktionsbereich nach unten ab und wird in das den Kanal durchströmende Seewasser eingetragen. Im Reaktionsbereich sind demnach für das Agens keine Antriebsmittel erforderlich. Mit dem Eintrag in das den Kanal durchströmende Seewasser wird das Agens sofort aus dem Bereich des Waschturms ausgetragen. Der Waschturm kann deshalb bezüglich seiner eigentlichen Reinigungsfunktion optimal dimensioniert werden.

Besonders vorteilhaft erweist es sich, wenn eine Breite des Kanals im Bereich des Waschturms im Wesentlichen einem Durchmesser des Wachturms entspricht. Auf diese Weise kann der Waschturm direkt auf den Kanal aufgesetzt sein, so dass eine bautechnisch einfache Vorrichtung erreicht werden kann. Natürlich kann auch vorgesehen sein, dass der Kanal nacheinander mehrere Waschtürme durchströmt, die beispielsweise neben- beziehungsweise nacheinander auf dem Kanal angeordnet sein können. Natürlich kann je nach Erfordernis auch vorgesehen sein, dass das Rauchgas mehrere strömungstechnisch seriell hintereinander geschaltete Waschtürme durchströmt, die gleichermaßen vom Seewasser des Kanals oder auch mehrerer Kanäle durchströmt werden. So kann beispielsweise eine einfache Anpassung an unterschiedlich belastete Rauchgase erreicht werden, indem lediglich die Kaskadierung bedarfsgerecht angepasst wird. Daneben bestehen die bereits bekannten Steuerungs- und Regelungsmöglichkeiten, um die Reinigungsleistung bedarfsgerecht anpassen zu können.

Weiterhin wird vorgeschlagen, dass der Kanal dem Eintrag des den Reaktionsbereich verlassenden seewasserbasierten Agens strömungstechnisch nachgeordnet beckenförmig verbreitert ist. Hierdurch kann erreicht werden, dass die Strömung im Kanal hinsichtlich ihrer Geschwindigkeit reduziert wird. Dies erlaubt es, dass sich unerwünschte Schwebstoffe am Boden des Kanals ablagern können. Diese können dann von Zeit zu Zeit mittels Schiebern und dergleichen ausgetragen werden, so dass eine weitere Reinigung des zurückzuführenden Seewassers erreicht werden kann. So kann beispielsweise vorgesehen sein, dass die beckenförmige Verbreiterung die Breite des Kanals um den Faktor von etwa 2 bis 15 überschreitet. Gegebenenfalls kann die beckenförmige Verbreiterung auch strömungstechnisch optimierte Bereiche zum Ablagern von Schwebstoffen aufweisen, so dass eine entsprechende Ablagerung, beispielsweise in Form von Schlamm oder dergleichen an bevorzugten Stellen auf einfache Weise aus dem Kanal ausgetragen werden kann.

Um verbesserte Voraussetzungen zur Einhaltung von Grenzwerten zu schaffen, kann vorgesehen sein, dass im Bereich der beckenförmigen Verbreiterung des Kanals eine Zuführung für frisches Seewasser angeordnet ist. Darüber hinaus kann erreicht werden, dass Ablagerungen im Bereich der beckenförmigen Verbreiterung vermieden werden, indem eine entsprechend hohe Strömung zumindest zeitweise erreicht werden kann. Auf diese Weise kann die Zuverlässigkeit und die einfache Bedienbarkeit weiter verbessert werden.

Gemäß einer weiteren vorteilhaften Ausgestaltung wird vorgeschlagen, dass der Kanal dem Eintrag des den Reaktionsbereich verlassenden seewasserbasierten Agens strömungstechnisch nachgeordnet eine Katalysatoreinheit aufweist. Die Katalysatoreinheit kann dazu vorgesehen sein, weitere unerwünschte chemische Verbindungen zu neutralisieren beziehungsweise umzuwandeln, so dass sie entweder als Schwebstoffe aus dem Seewasser, insbesondere im Bereich der beckenförmigen Verbreiterung ausgetragen oder in chemisch unbedenkliche Stoffe umgewandelt werden können.

Insbesondere wird vorgeschlagen, dass die Katalysatoreinheit im Bereich der beckenförmigen Verbreiterung angeordnet ist. Vorzugsweise ist diese im Wandbereich beziehungsweise im Bodenbereich der beckenförmigen Verbreiterung angeordnet. Natürlich kann die Katalysatoreinheit auch in Form eines in der beckenförmigen Verbreiterung angeordneten Gerüsts, Gestells oder dergleichen ausgebildet sein, um beispielsweise eine möglichst große Oberfläche bilden zu können, die mit dem Seewasser in Kontakt kommt.

Nach einer weiteren Ausgestaltung wird vorgeschlagen, dass der Kanal dem Eintrag des den Reaktionsbereich verlassenden seewasserbasierten Agens strömungstechnisch nachgeordnet eine Oxidanszuführeinheit aufweist. Mit der Oxidanszuführeinheit kann dem Seewasser ein Oxidans zugeführt werden, mit dem unerwünschte Stoffe im Seewasser oxidiert werden können. Als Oxidans kann beispielsweise Luft, Sauerstoff oder dergleichen zugeführt werden. Die Oxidanszuführeinheit kann beispielsweise durch ein Röhrensystem gebildet sein, welches im Bodenbereich der beckenförmigen Verbreiterung angeordnet ist, und entsprechende Poren aufweist, durch die das Oxidans in das Seewasser eingebracht werden kann. Besonders vorteilhaft ist die Oxidanszuführeinheit im Bereich der beckenförmigen Verbreiterung angeordnet, so dass bei geeigneter Einstellung der Verfahrensparameter eine möglichst lange Verweilzeit von beispielsweise gasförmigem Oxidans innerhalb des Seewassers erreicht werden kann.

Nach einer Weiterbildung der Erfindung wird vorgeschlagen, dass der Kanal dem Eintrag des den Reaktionsbereich verlassenden seewasserbasierten Agens strömungstechnisch vorgeordnet Entnahmemittel für Seewasser aufweist. Die Entnahmemittel können beispielsweise durch Pumpen gebildet sein, die vorzugsweise mit einem entsprechenden Entnahmefilter in den Kanal münden. Das entnommene Seewasser kann als Agens der Rauchgasreinigungsvorrichtung zugeführt werden. Beispielsweise kann das entnommene Seewasser in den Reaktionsbereich eingedüst werden. Natürlich können dem entnommenen Seewasser weitere Stoffe zugeführt werden, mit denen die Wirksamkeit im Reaktionsbereich verbessert oder erweitert werden kann. Dies kann vorzugsweise in Abhängigkeit der im Rauchgas enthaltenen Schadstoffe erfolgen.

Weiterhin kann der Kanal dem Eintrag des den Reaktionsbereich verlassenden seewasserbasierten Agens strömungstechnisch vorgeordnet Steuermittel zur Steuerung der Strömung im Kanal aufweisen. Die Steuermittel können beispielsweise durch einstellbare Barrieren, regelbare Pumpen und dergleichen gebildet sein. Auf diese Weise kann die Strömungsmenge im Kanal gesteuert werden. Vorzugsweise ist der Volumenstrom an die Reinigungsleistung der Rauchgasreinigungsvorrichtung beziehungsweise des Waschturms angepasst. Hierdurch kann Energie eingespart werden.

In einer vorteilhaften Weiterbildung weist der Waschturm einen Zuführkanal für frisches Seewasser auf, der in den Kanal mündet. Mit dem Zuführkanal ist es möglich, zusätzlich frisches Seewasser in den Kanal einzuspeisen, so dass Schadstoffkonzentrationen sowie pH-Wert und dergleichen reduziert werden können. Zusätzlich kann der Zuführkanal Steuermittel aufweisen, mit denen der zugeführte Volumenstrom an frischem Seewasser gesteuert werden kann. Die Steuerung kann mit einer Regelung verbunden sein, die den Volumenstrom in Abhängigkeit eines gemessenen Istwertes im Kanal angepasst einstellt. Als Einstellgröße kann hier ein Sollwert bereitgestellt werden, auf den geregelt wird.

Vorzugsweise ist die Mündung des Zuführkanals in den Kanal zwischen dem Waschturm und der Verbreiterung angeordnet. Dies erlaubt es, in der Verbreiterung den gewünschten pH-Wert beziehungsweise die gewünschten Schadstoffwerte vor weiteren Behandlungsschritten zu reduzieren, um die Behandlungsschritte wirksamer durchführen zu können. Darüber hinaus können Anforderungen an die Ausgestaltung des Kanals beziehungsweise an die Verbreiterung vereinfacht werden.

Gemäß einer vorteilhaften Weiterbildung sind Mittel zur Erzeugung einer turbulenten Strömung im Bereich der Mündung vorgesehen. Hierdurch kann eine gute Durchmischung des mit Agens belasteten Seewassers im Kanal mit dem zugeführten frischen Seewasser erreicht werden. Die Homogenität im Seewasser hinsichtlich pH-Wert oder Schadstoffe kann weiter verbessert werden. Die Mittel können beispielsweise durch Barrieren, Hindernisse, besondere Mündungsanschlüsse des Zuführkanals und dergleichen gebildet sein.

Gemäß einer Weiterbildung kann der Waschturm einen Bypass-Kanal aufweisen, mittels dem strömungstechnisch vor dem Waschturm Seewasser aus dem Kanal abzweigbar und strömungstechnisch hinter dem Waschturm wenigstens teilweise wieder zuführbar ist. So kann auf einfache Weise erreicht werden, dass der Waschturm zu Wartungszwecken kurzfristig nicht von Seewasser durchströmt wird, so dass der Kanal im Bereich des Waschturms zugänglich ist. So können Ablagerungen sicher entfernt und Beschädigungen, Undichtigkeiten und dergleichen ausgebessert werden.

Die Strömung im Kanal kann bedarfsgerecht auf den Bypass-Kanal und den durch den Waschturm durchführenden Kanal verteilt werden. Dies kann vorteilhaft sein, wenn beispielsweise zusätzliche Agenzien mit dem den Waschturm durchströmenden Seewasser zugeführt werden, um die Konzentration dieser Agenzien in einem vorgebbaren, günstigen Bereich halten zu können.

Mit der Erfindung wird ferner ein Verfahren zum Betrieb einer Rauchgasreinigungsvorrichtung, insbesondere eines Waschturms vorgeschlagen, wobei einem Reaktionsbereich der Rauchgasreinigungsvorrichtung ein seewasserbasiertes Agens zugeführt und in das die Rauchgasreinigungsvorrichtung durchströmende Rauchgas eingetragen wird, wobei das Agens nach dem Verlassen des Reaktionsbereichs in einen seewasserdurchströmten Kanal eingetragen wird.

Im Unterschied zum Stand der Technik sieht die Erfindung erstmals ein Verfahren vor, bei dem das den Reaktionsbereich verlassende Agens direkt in die Rauchgasreinigungsvorrichtung durchströmenden Seewasser eingetragen und mit diesem im Wesentlichen unmittelbar aus der Rauchgasreinigungsvorrichtung ausgetragen wird. Eine Rückführung ist demzufolge nicht vorgesehen. Hierdurch kann die Rauchgasreinigungsvorrichtung beziehungsweise der Waschturm hinsichtlich seiner Bautechnik und dergleichen deutlich vereinfacht werden, wodurch Kosten und Aufwand reduziert werden können. Die einfache Konstruktion der Rauchgasreinigungsvorrichtung beziehungsweise des Waschturms erlaubt darüber hinaus eine einfache, zuverlässige Bedienbarkeit. Darüber hinaus schafft die unmittelbare Vermischung des den Reaktionsbereich verlassenden Agens mit dem die Anlage durchströmenden Seewasser optimale Voraussetzungen für eine erforderliche Weiterbehandlung. Die Erfindung erlaubt es weiterhin, dass permanent frisches Agens in den Reaktionsbereich eingebracht wird, so dass konstante gleichmäßige und gleichmäßig wirksame Reaktionsbedingungen erreicht werden können. Darüber hinaus kann eine einfache Prozesssteuerung erreicht werden.

Eine besonders einfache Ausgestaltung des Verfahrens ergibt sich, wenn das Agens im Reaktionsbereich mittels Gravitation angetrieben wird. Hierdurch können separate Antriebsmittel eingespart werden, wodurch sowohl Kosten als auch Wartungsaufwand reduziert werden können.

Vorzugsweise wird der Kanal mit frischem Seewasser gespeist. Diese Ausgestaltung erlaubt es, ein Herstellen homogener Prozessbedingungen weiter zu verbessern, so dass die Prozessführung weiter vereinfacht werden kann. Aufwändige Recycling-Vorrichtungen und dergleichen sowie die entsprechenden Zubehöreinrichtungen können eingespart werden.

Gemäß einem weiteren vorteilhaften Vorschlag wird als Agens dem Kanal strömungstechnisch vor dem Eintragen des den Reaktionsbereich verlassenden seewasserbasierten Agens entnommenes Seewasser verwendet. Hierdurch kann weitgehend die Verwendung von Chemikalien und dergleichen vermieden oder zumindest reduziert werden, die bekanntermaßen nicht nur zusätzliche Kosten bedeutet, sondern darüber hinaus auch entsorgungsseitig problematisch sein kann. Insgesamt kann ein sehr einfaches Verfahren erreicht werden, welches sich auch in Entwicklungsländern aufgrund der geringen Kosten und der einfachen Konstruktion realisieren lässt.

Eine weitere Ausgestaltung der Erfindung sieht vor, dass im Bereich des Eintragens des den Reaktionsbereich verlassenden seewasserbasierten Agens eine turbulente Strömung im den Kanal durchströmenden Seewasser erzeugt wird. Hierdurch kann bereits in diesem Bereich eine gute Durchmischung des Agens mit dem Seewasser erreicht werden. Die turbulente Strömung kann beispielsweise durch Hindernisse im Kanal, vorzugsweise im Waschturmbereich und dergleichen erzeugt werden.

Weiterhin wird vorgeschlagen, dass den Kanal strömungstechnisch nach dem Eintragen des den Reaktionsbereich verlassenden seewasserbasierten Agens frisches Seewasser zugeführt wird. Auf diese Weise können weiter verbesserte Bedingungen geschaffen werden, so dass vorgeschriebene Grenzwerte leichter erreicht werden können.

Vorzugsweise wird das Zuführen des frischen Seewassers gesteuert. Auf diese Weise wird nur die Menge frisches Seewasser hinzugefügt, die erforderlich ist, um die vorgeschriebenen Grenzwerte einhalten zu können. Hierdurch kann Energie eingespart werden.

Besonders vorteilhaft erweist es sich, wenn mit dem Zuführen des frischen Seewassers ein pH-Wert geregelt wird. Das behandelte Seewasser ist beispielsweise zur Rückführung in das Gewässer vorgesehen, aus dem es entnommen wurde. Der pH-Wert des Seewassers nach Mischung soll gemäß einem Vorschlag pH 6 nicht unterschreiten. Die Regelung kann beispielsweise die Förderleistung für das dem Reaktionsbereich zuzuführende Agens sowie auch die Strömungsmenge für das den Kanal durchströmende frische Seewasser regeln. Die Effizienz des Verfahrens kann weiter verbessert werden.

Eine weitere Verbesserung kann erreicht werden, wenn das mit Agens beaufschlagte Seewasser mit dem frischen Seewasser vermischt wird. Hierdurch kann einerseits eine Erhöhung des pH-Wertes erreicht werden, und optimierte Bedingungen für die Weiterbehandlung geschaffen werden. Die Mischung kann durch Erzeugen einer turbulenten Strömung im Seewasser verbessert werden. Die turbulente Strömung kann beispielsweise durch geeignetes Einführen des frischen Seewassers in den Kanal erreicht werden.

Vorzugsweise wird das seewasserbasierte Agens in den Reaktionsbereich eingedüst. Dies erlaubt es, dass das Agens in feinverteilter Form in das zu reinigende Rauchgas eingebracht werden kann und eine möglichst große Oberfläche zu diesem bildet, so dass eine möglichst effektive Reinigung erreicht werden kann. Die Verfahrenswirksamkeit kann weiter verbessert werden.

Vorteilhaft wird ferner vorgeschlagen, dass dem Eintragen des den Reaktionsbereich verlassenden seewasserbasierten Agens in das Seewasser strömungstechnisch nachgeordnet ein Oxidationsmittel zugeführt wird. Hierdurch kann erreicht werden, dass unerwünschte Inhaltsstoffe im Seewasser zu unschädlichen Stoffen oxidiert werden können.

In einer Ausgestaltung wird vorgeschlagen, dass das frische Seewasser strömungstechnisch vor dem Oxidationsmittel zugeführt wird. Dies erlaubt es, den pH-Wert bereits vor der Zugabe des Oxidationsmittels zu erhöhen, um somit die Wirksamkeit des Oxidationsmittels verbessern zu können. Dies erlaubt es, den Zusatz an Oxidationsmittel insgesamt zu reduzieren.

Darüber hinaus kann vorgesehen sein, dass dem Eintragen des den Reaktionsbereich verlassenden seewasserbasierten Agens in das Seewasser strömungstechnisch nachgeordnet eine Katalyse durchgeführt wird. Auch hierdurch können unerwünschte Stoffe im Seewasser in Stoffe umgewandelt werden, die unschädlich sind oder ausfällbar sind. Natürlich kann auch vorgesehen sein, dass durch die Katalyse Stoffe derart umgewandelt werden, so dass sie in Zusammenwirkung mit einer Oxidation durch ein Oxidationsmittel in einen unschädlichen Stoff umgewandelt werden können.

Insbesondere kann natürlich vorgesehen sein, dass vor Durchführung der Katalyse zunächst ebenfalls frisches Seewasser zugeführt wird. Hierdurch lassen sich Prozessparameter optimieren, wodurch die Verfahrensführung kostengünstiger gestaltet werden kann.

Vorteilhaft erweist es sich ferner, wenn aus dem Kanal strömungstechnisch vor dem Waschturm ein Teil des Seewassers abgezweigt und mittels eines Bypass-Kanals dem Kanal strömungstechnisch nach dem Waschturm wenigstens teilweise wieder zugeführt wird. Dies erlaubt es, die den Waschturm durchströmende Strömungsmenge von Seewasser bedarfsgerecht und kurzfristig anzupassen, um beispielsweise Schadstoffschwankungen im Rauchgas oder auch Rauchgasmengenschwankungen auffangen zu können. Die Prozessführung wird weiter vereinfacht.

Insbesondere wird vorgeschlagen, dass wenigstens einer der Verfahrensschritte zumindest teilweise außerhalb des Waschturms ausgeführt wird. Vorzugsweise werden insbesondere Schritte zur Nachbehandlung des Seewassers außerhalb des Waschturms ausgeführt, so dass einfache bautechnische Anlagen erreicht werden können.

Weitere Vorteile und Merkmale sind dem folgenden Ausführungsbeispiel zu entnehmen. Das Ausführungsbeispiel wird anhand einer Schemazeichnung erläutert und dient ausschließlich der Erläuterung der Erfindung, ohne diese zu beschränken.

Es zeigen:
- Fig. 1:: schematisch eine Abgasreinigungsanlage für einen Verbrennungsofen zur Verbrennung von Steinkohle und
- Fig. 2:: eine perspektivische Ansicht einer Anordnung mit einem Waschturm gemäß der Erfindung.

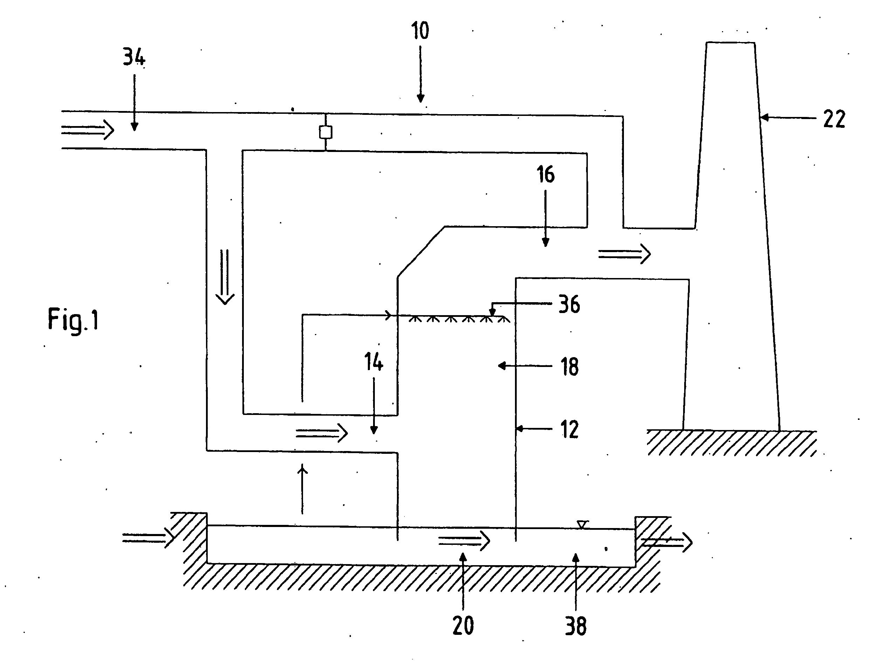

In Fig. 1 ist schematisch ein gattungsgemäßer Aufbau für eine Rauchgasreinigung dargestellt, wobei ein Kanal 34 ein Rauchgas von einem nicht näher dargestellten Verbrennungsofen abführt. Der Kanal 34 mündet in einen Rauchgaseinlaß 14 eines Waschturms 12. Der Rauchgaseinlass 14 ist im unteren Bereich des Waschturms 12 angeordnet. Im oberen Bereich des Waschturms 12 ist ein Rauchgasauslass angeordnet, der in strömungstechnischer Verbindung mit einem Kamin 22 steht, über den das gereinigte Rauchgas in die Atmosphäre abgegeben wird.

Der Waschturm 12 weist zwischen seinem Rauchgaseinlass 14 und seinem Rauchgasauslass 16 einen Reaktionsbereich 18 auf, in dessen oberen Bereich eine Eindüseinrichtung 36 angeordnet ist, mittels der Seewasser als Agens in das den Waschturm 12 von unten nach oben durchströmende Rauchgas eingedüst wird. Das eingedüste Seewasser wird nach Verlassen des Reaktionsbereichs 18 aufgrund einer Gravitationswirkung in einen unterhalb des Rauchgaseinlasses 14 angeordneten Kanal 20 im Waschturm 12 eingetragen. Mit dem Kanal 20 wird Seewasser zu dem Waschturm 12 geführt und wieder abgeführt. Das Seewasser durchströmt den Waschturm 12 somit im unteren Bereich. Der Waschturm 12 kann folglich auf dem Kanal 20 aufgesetzt sein.

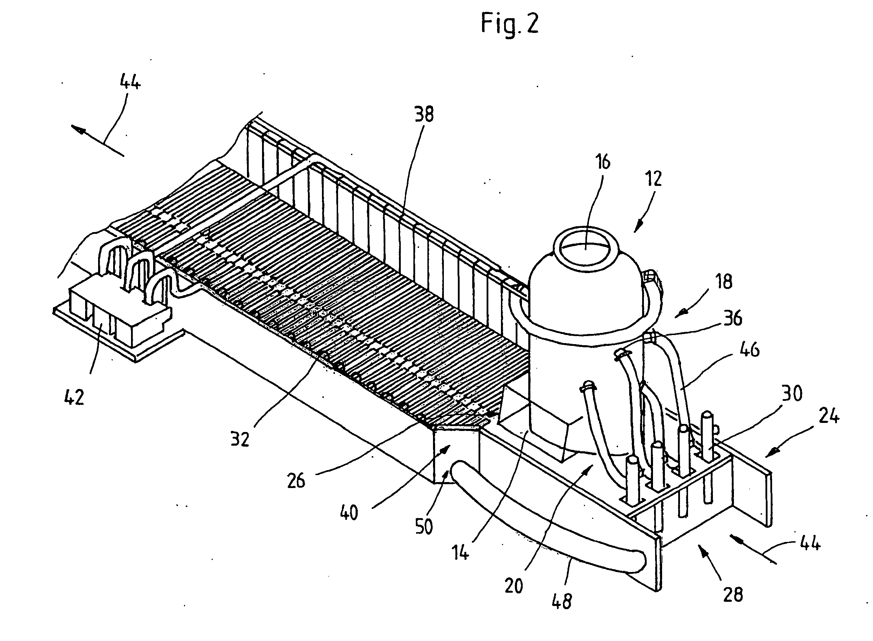

Über eine Pumpe 30 (Fig. 2) wird frisches Seewasser der Eindüseinrichtung 36 zugeführt. Der Kanal 20 ist ferner strömungstechnisch dem Waschturm 12 nachgeordnet zu einem Neutralisierungsbecken 38 verbreitert, welchem neben dem verbrauchten Seewasser aus dem Kanal 20 frisches Seewasser zugeführt wird. Das Neutralisierungsbecken 38 ist mit einem nicht näher bezeichneten Seewasserrücklauf verbunden, über den das neutralisierte Seewasser wieder an das Gewässer abgegeben wird.

Fig. 2 zeigt ausschnittsweise eine perspektivische Ansicht einer Rauchgasreinigungsanlage mit einer Anordnung von Waschturm 12 und Seewasserkanal 20 gemäß der Erfindung. Der Kanal 20 führt in seinem Bereich 24 frisches Seewasser aus einem nicht näher bezeichneten Gewässer der Rauchgasreinigungsanlage 10 zu. Der Kanal 20 ist durch den unteren Bereich des Waschturms 12 unterhalb des Rauchgaseinlasses 14 durchgeführt. Gegenüberliegend zum Bereich 24 ist am Waschturm 12 eine Abführungsöffnung 26 für das mit Agens beaufschlagte Seewasser angeordnet. An diese schließt sich eine beckenförmige Verbreiterung 40 des Kanals 20 an, die das Neutralisierungsbecken 38 umfasst. Die Verbreiterung 40 weist eine Oxidanszuführeinheit 32 auf, die im unteren Bereich der Verbreiterung 40 angeordnet ist. Mittels einer Luftzuführeinrichtung 42 wird Luft in fein verteilter Form dem mit Agens beaufschlagten Seewasser zugeführt. Mit 44 ist die Strömung des Seewassers durch den Kanal 20 bezeichnet.

Der Waschturm 12 weist oberhalb des Rauchgaseinlasses 14 den Reaktionsbereich 18 auf, an den sich nach oben der Rauchgasauslass 16 anschließt. Das Rauchgas strömt somit entgegen der Gravitation von unten nach oben durch den Waschturm 12. Eine Eindüseinrichtung 36 ist im Reaktionsbereich 18 angeordnet und über Leitungen 46 mit Pumpen 30 strömungstechnisch verbunden. Die Pumpen 30 fördern aus einem Bereich 28 strömungstechnisch vor dem Bereich 24 frisches Seewasser durch die Leitungen 46 zur Eindüseinrichtung 38. In der vorliegenden Ausgestaltung der Erfindung wird ausschließlich frisches Seewasser als Agens für die Rauchgasreinigung verwendet.

Das in den Reaktionsbereich 18 eingedüste Seewasser tritt in Wechselwirkung mit dem den Waschturm 12 durchströmenden Rauchgas, wobei Schadstoffe aus dem Rauchgas entnommen werden. Diese reichern sich in dem ausgedüsten Seewasser an, welches in den Kanal 20 absinkt. Das den Kanal 20 erreichende Agens, hier das ausgedüste Seewasser, vermischt sich mit dem den Kanal 20 durchströmenden frischen Seewasser und gelangt in die Verbreiterung 40. Hier wird mittels der Oxidanszuführeinheit 32 Luft in fein verteilter Form dem mit Agens beaufschlagten Seewasser zugeführt.

Mittels eines nicht näher bezeichneten Steuerventils kann der Volumenstrom des Seewassers gesteuert werden. Dazu ist eine nicht näher bezeichnete pH-Wert-Istwerterfassung in der Verbreiterung 40 angeordnet, mit der der pH-Wert gemessen werden kann. Dieser wird mit einem pH-Sollwert verglichen. Da der pH-Wert des den Reaktionsbereich 18 verlassenden Agens etwa bei 3 liegt, erfolgt durch die Vermischung mit frischem Seewasser im Kanal 20 ein Anstieg des pH-Werts. Der Anstieg ist davon abhängig, wie die Strömungsmenge des dem Kanal 20 zugeführten frischen Seewassers in Bezug auf das Agens eingestellt wird.

Wie aus Fig. 2 ersichtlich ist, ist ein Zuführkanal 48 vorgesehen, der hinter dem Waschturm 12 in den Kanal 20 mündet, und zwar noch vor der Verbreiterung 40. Mit dem Zuführkanal 48 wird frisches Seewasser zugeführt, welches zuvor stromaufwärts vor dem Waschturm 12 dem Kanal 20 entnommen wurde. Mit dem zusätzlich zugeführten frischen Seewasser wird der pH-Wert innerhalb der Verbreiterung 40 weiter angehoben, und zwar bevor das Oxidans zugeführt wird.

Hierdurch kann die Wirksamkeit des Oxidans verbessert werden. Die Mündung 50 in den Kanal 20 ist derart ausgestaltet, dass eine turbulente Strömung erreicht wird, wodurch eine gute Durchmischung des mit Agens beaufschlagten Seewassers mit dem frischen Seewasser erfolgen kann.

Die vorliegende Ausgestaltung sieht ferner vor, dass der Volumenstrom des frischen Seewassers im Zuführkanal 48 gesteuert werden kann, so dass eine feine Regulierung des pH-Wertes erreicht werden kann.

Bekanntermaßen liegt der pH-Wert von Seewasser in einem Bereich von etwa 7,5 bis 8,5. Mit der Regelung kann nunmehr durch Einstellen der Durchflussmenge erreicht werden, daß der pH-Wert im Bereich der Abführungsöffnung 26 den Wert 6 erreicht. Mit diesem pH-Wert kann die Mischung aus Agens und frischem Seewasser in den Kanal 40 eingespeist werden.

Das in den Figuren dargestellte Ausführungsbeispiel dient lediglich der Erläuterung der Erfindung und ist für diese nicht beschränkend.

### Bezugszeichenliste

- 10: Rauchgasreinigungsanlage
- 12: Waschturm
- 14: Rauchgaseinlass
- 16: Rauchgasauslass
- 18: Reaktionsbereich
- 20: Kanal
- 22: Kamin
- 24: Bereich
- 26: Abführungsöffnung
- 28: Bereich
- 30: Pumpe
- 32: Oxidanszuführeinheit
- 34: Kanal
- 36: Eindüseinrichtung
- 38: Neutralisierungsbecken
- 40: Verbreiterung
- 42: Luftzuführeinrichtung
- 44: Strömungsrichtung
- 46: Leitung
- 48: Zuführkanal
- 50: Mündung

## Patentansprüche

1. Rauchgasreinigungsanlage (10) mit einem Waschturm (12), aufweisend einen Rauchgaseinlass (14), einen Rauchgasauslass (16), sowie einen Reaktionsbereich. (18) zur Reaktion eines den Reaktionsbereich (18) durchströmenden Rauchgases mit einem seewasserbasierten Agens,
**dadurch gekennzeichnet,**
**dass** der Waschturm (12) oberhalb eines seewasserdurchströmten Kanals (20) angeordnet ist und das seewasserbasierte Agens aus dem Reaktionsbereich (18) in den seewasserdurchströmten Kanal (20) fällt.

2. Rauchgasreinigungsanlage nach Anspruch 1, **dadurch gekennzeichnet, dass** eine Breite des Kanals (20) im Bereich des Waschturms (12) im Wesentlichen einem Durchmesser des Wachturms (12) entspricht.

3. Rauchgasreinigungsanlage nach Anspruch 1 oder 2, **dadurch gekennzeichnet, dass** der Kanal (20) dem Eintrag des den Reaktionsbereich (18) verlassenden seewasserbasierten Agens strömungstechnisch nachgeordnet beckenförmig verbreitert ist.

4. Rauchgasreinigungsanlage nach Anspruch 3, **dadurch gekennzeichnet, dass** im Bereich der beckenförmigen Verbreiterung (40) des Kanals (20) eine Zuführung für frisches Seewasser angeordnet ist.

5. Rauchgasreinigungsanlage nach einem der Ansprüche 1 bis 4, **dadurch gekennzeichnet, dass** der Kanal (20) dem Eintrag des den Reaktionsbereich (18) verlassenden seewasserbasierten Agens strömungstechnisch nachgeordnet eine Katalysatoreinheit aufweist.

6. Rauchgasreinigungsanlage nach Anspruch 5, **dadurch gekennzeichnet, dass** die Katalysatoreinheit im Bereich der beckenförmigen Verbreiterung (40) angeordnet ist.

7. Rauchgasreinigungsanlage nach einem der Ansprüche 1 bis 6, **dadurch gekennzeichnet, dass** der Kanal (20) dem Eintrag des den Reaktionsbereich (18) verlassenden seewasserbasierten Agens strömungstechnisch nachgeordnet eine Oxidanszuführeinheit (32) aufweist.

8. Rauchgasreinigungsanlage nach Anspruch 7, **dadurch gekennzeichnet, dass** die Oxidanszuführeinheit (32) im Bodenbereich der beckenförmigen Verbreiterung (40) angeordnet ist.

9. Rauchgasreinigungsanlage nach einem der Ansprüche 1 bis 8, **dadurch gekennzeichnet, dass** der Kanal (20) dem Eintrag des den Reaktionsbereich (18) verlassenden seewasserbasierten Agens strömungstechnisch vorgeordnet Entnahmemittel (30) für Seewasser aufweist.

10. Rauchgasreinigungsanlage nach einem der Ansprüche 1 bis 9, **dadurch gekennzeichnet, dass** der Kanal (20) dem Eintrag des den Reaktionsbereich (18) verlassenden seewasserbasierten Agens strömungstechnisch vorgeordnet Steuermittel zur Steuerung der Strömung im Kanal (20) aufweist.

11. Rauchgasreinigungsanlage nach einem der Ansprüche 1 bis 10, **gekennzeichnet durch** einen Zuführkanal (48) für frisches Seewasser, der in den Kanal (20) mündet.

12. Rauchgasreinigungsanlage nach Anspruch 11, **dadurch gekennzeichnet, dass** die Mündung (50) des Zuführkanals (48) in den Kanal (20) zwischen dem Waschturm (12) und der Verbreiterung (40) angeordnet ist.

13. Rauchgasreinigungsanlage nach Anspruch 11 oder 12, **gekennzeichnet durch** Mittel zur Erzeugung einer turbulenten Strömung im Bereich der Mündung (50).

14. Rauchgasreinigungsanlage nach einem der Ansprüche 1 bis 13, **gekennzeichnet durch** einen Bypass-Kanal, mittels dem strömungstechnisch vor dem Waschturm (12) Seewasser aus dem Kanal (20) abzweigbar und strömungstechnisch hinter dem Waschturm (12) wenigstens teilweise wieder zuführbar ist.

15. Verfahren zum Betrieb einer Rauchgasreinigungsvorrichtung (10), wobei einem Reaktionsbereich (18) eines Waschturms (12) der Rauchgasreinigungsvörrichtung (10) ein seewasserbasiertes Agens zugeführt und in das die Rauchgasreinigungsvorrichtung (10) durchströmendes Rauchgas eingetragen wird, wobei das Agens nach dem Verlassen des Reaktionsbereichs (18) in einen unterhalb des Waschturms (12) angeordneten seewasserdurchströmten Kanal (20) eingetragen wird.

16. Verfahren nach Anspruch 15, **dadurch gekennzeichnet, dass** das Agens im Reaktionsbereich (18) mittels Gravitation angetrieben wird.

17. Verfahren nach Anspruch 15 oder 16, **dadurch gekennzeichnet, dass** der Kanal (20) mit frischem Seewasser gespeist wird.

18. Verfahren nach einem der Ansprüche 15 bis 17, **dadurch gekennzeichnet, dass** als Agens dem Kanal (20) strömungstechnisch vor dem Eintragen des den Reaktionsbereich (18) verlassenden seewasserbasierten Agens entnommenes Seewasser verwendet wird.

19. Verfahren nach einem der Ansprüche 15 bis 18, **dadurch gekennzeichnet, dass** im Bereich des Eintragens des den Reaktionsbereich (18) verlassenden seewasserbasierten Agens eine turbulente Strömung im den Kanal (20) durchströmenden Seewasser erzeugt wird.

20. Verfahren nach einem der Ansprüche 15 bis 19, **dadurch gekennzeichnet, dass** dem Kanal (20) strömungstechnisch nach dem Eintragen des den Reaktionsbereich (18) verlassenden seewasserbasierten Agens frisches Seewasser zugeführt wird.

21. Verfahren nach Anspruch 20, **dadurch gekennzeichnet, dass** das Zuführen des frischen Seewassers gesteuert wird.

22. Verfahren nach Anspruch 20 oder 21, **dadurch gekennzeichnet, dass** mit dem Zuführen des frischen Seewassers ein pH-Wert geregelt wird.

23. Verfahren nach einem der Ansprüche 20 bis 22, **dadurch gekennzeichnet, dass** das mit Agens beaufschlagte Seewasser mit dem frischen Seewasser vermischt wird.

24. Verfahren nach einem der Ansprüche 15 bis 23, **dadurch gekennzeichnet, dass** das seewasserbasierte Agens in den Reaktionsbereich (18) eingedüst wird.

25. Verfahren nach einem der Ansprüche 15 bis 24, **dadurch gekennzeichnet, dass** dem Eintragen des den Reaktionsbereich (18) verlassenden seewasserbasierten Agens in das Seewasser strömungstechnisch nachgeordnet ein Oxidationsmittel zugeführt wird.

26. Verfahren nach Anspruch 25, **dadurch gekennzeichnet, dass** das frische Seewasser strömungstechnisch vor dem Oxidationsmittel zugeführt wird.

27. Verfahren nach einem der Ansprüche 15 bis 26, **dadurch gekennzeichnet, dass** dem Eintragen des den Reaktionsbereich (18) verlassenden seewasserbasierten Agens in das Seewasser strömungstechnisch nachgeordnet eine Katalyse durchgeführt wird.

28. Verfahren nach einem der Ansprüche 15 bis 27, **dadurch gekennzeichnet, dass** aus dem Kanal (20) strömungstechnisch vor dem Waschturm (12) ein Teil des Seewassers abgezweigt und mittels eines Bypass-Kanals dem Kanal (20) strömungstechnisch nach dem Waschturm (12) wenigstens teilweise wieder zugeführt wird.

29. Verfahren nach einem der Ansprüche 15 bis 28, **dadurch gekennzeichnet, dass** wenigstens einer der Verfahrensschritte gemäß einem der Ansprüche 15 bis 28 zumindest teilweise außerhalb des Waschturms (12) ausgeführt wird.

## Claims

1. A flue gas purification plant (10) with a washing tower (12), comprising a flue gas inlet (14), a flue gas outlet (16), as well as a reaction region (18) for the reaction of a flue gas flowing through the reaction region (18) with a seawater-based agent,
**characterised in that**
the washing tower (12) is disposed above a channel (20) through which seawater flows and the seawater-based agent falls out of the reaction region (18) into the channel (20) through which seawater is flowing.

2. The flue gas purification plant according to claim 1, **characterised in that** a width of the channel (20) in the region of the washing tower (12) essentially corresponds to a diameter of the washing tower (12).

3. The flue gas purification plant according to claim 1 or 2, **characterised in that** the channel (20) is widened basin-shaped downstream of the entry of the seawater-based agent exiting the reaction region (18).

4. The flue gas purification plant according to claim 3, **characterised in that** a supply for fresh seawater is disposed in the region of the basin-shaped widened portion (40) of the channel (20).

5. The flue gas purification plant according to any one of claims 1 to 4, **characterised in that** the channel (20) comprises a catalyst unit disposed downstream of the entry of the seawater-based agent exiting the reaction region (18).

6. The flue gas purification plant according to claim 5, **characterised in that** the catalyst unit is disposed in the region of the basin-shaped widened portion (40).

7. The flue gas purification plant according to any one of claims 1 to 6, **characterised in that** the channel (20) comprises an oxidant supply unit (32) disposed downstream of the entry of the seawater-based agent exiting the reaction region (18).

8. The flue gas purification plant according to claim 7, **characterised in that** the oxidant supply unit (32) is disposed in the bottom region of the basin-shaped widened portion (40).

9. The flue gas purification plant according to any one of claims 1 to 8, **characterised in that** the channel (20) comprises removal means (30) for seawater disposed upstream of the entry of the seawater-based agent exiting the reaction region (18).

10. The flue gas purification plant according to any one of claims 1 to 9, **characterised in that** the channel (20) comprises control means for controlling the flow in the channel (20) disposed upstream of the entry of the seawater-based agent exiting the reaction region (18).

11. The flue gas purification plant according to any one of claims 1 to 10, **characterised by** a supply channel (48) for fresh seawater, which emerges into the channel (20).

12. The flue gas purification plant according to claim 11, **characterised in that** the mouth (50) of the supply channel (48) into the channel (20) is disposed between the washing tower (12) and the widened portion (40).

13. The flue gas purification plant according to claim 11 or 12, **characterised by** means for generating a turbulent flow in the region of the mouth (50).

14. The flue gas purification plant according to any one of claims 1 to 13, **characterised by** a bypass channel, by means of which seawater can be branched off from the channel (20) upstream of the washing tower (12) and can be at least partially fed back again downstream of the washing tower (12).

15. A method for operating a flue gas purification device (10), wherein a seawater-based agent is fed to a reaction region (18) of a washing tower (12) of the flue gas purification device (10) and is carried into the flue gas flowing through the flue gas purification device (10), wherein the agent, after exiting the reaction region (18), is carried into a channel (20) which is disposed beneath the washing tower (12) and through which seawater flows.

16. The method according to claim 15, **characterised in that** the agent is driven by means of gravitation in the reaction region (18).

17. The method according to claim 15 or 16, **characterised in that** the channel (20) is supplied with fresh seawater.

18. The method according to any one of claims 15 to 17, **characterised in that** seawater removed from the channel (20) upstream of the entry of the seawater-based agent exiting the reaction region (18) is used as an agent.

19. The method according to any one of claims 15 to 18, **characterised in that**, in the region of the entry of the seawater-based agent exiting the reaction region (18), a turbulent flow of seawater flowing through the channel (20) is generated.

20. The method according to any one of claims 15 to 19, **characterised in that** fresh seawater is fed to the channel (20) downstream of the entry of the seawater-based agent exiting the reaction region (18).

21. The method according to claim 20, **characterised in that** the supply of the fresh seawater is controlled.

22. The method according to claim 20 or 21, **characterised in that** a pH value is regulated with the supply of the fresh seawater.

23. The method according to any one of claims 20 to 22, **characterised in that** the seawater loaded with agent is mixed with the fresh seawater.

24. The method according to any one of claims 15 to 23, **characterised in that** the seawater-based agent is jetted into the reaction region (18).

25. The method according to any one of claims 15 to 24, **characterised in that** an oxidation agent is supplied downstream of the entry of the seawater-based agent into the seawater, said seawater-based agent exiting the reaction region (18).

26. The method according to claim 25, **characterised in that** the fresh seawater is supplied upstream of the oxidation agent.

27. The method according to any one of claims 15 to 26, **characterised in that** a catalysis is carried out downstream of the entry of the seawater-based agent into the seawater, said seawater-based agent exiting the reaction region (18).

28. The method according to any one of claims 15 to 27, **characterised in that** a part of the seawater is branched off from the channel (20) upstream of the washing tower (12) and is at least partially fed back again by means of a bypass channel to the channel (20) downstream of the washing tower (12).

29. The method according to any one of claims 15 to 28, **characterised in that** at least one of the method steps according to any one of claims 15 to 28 is carried out at least partially outside the washing tower (12).

## Revendications

1. Système d'épuration de gaz de fumées (10) avec une tour de lavage (12), comportant une entrée de gaz de fumées (14), une sortie de gaz de fumées (16), ainsi qu'une zone de réaction (18) pour la réaction d'un gaz de fumées circulant à travers la zone de réaction (18) avec un agent à base d'eau de mer, **caractérisé en ce que** la tour de lavage (12) est disposée au dessus d'un canal (20) à travers lequel circule de l'eau de mer et **en ce que** l'agent à base d'eau de mer tombe hors de la zone de réaction (18) dans le canal (20) à travers lequel circule de l'eau de mer.

2. Système d'épuration de gaz de fumées selon la revendication 1, **caractérisé en ce qu'**une largeur du canal (20) dans la région de la tour de lavage (12) correspond sensiblement à un diamètre de la tour de lavage (12).

3. Système d'épuration de gaz de fumées selon la revendication 1 ou 2, **caractérisé en ce qu'**en aval selon la technique d'écoulement de l'alimentation en agent à base d'eau de mer quittant la zone de réaction (18), le canal 20 est évasé en forme de bassin.

4. Système d'épuration de gaz de fumées selon la revendication 3, **caractérisé en ce que** dans la région de l'évasement en forme de bassin (40) du canal (20) est disposée une amenée d'eau de mer fraîche.

5. Système d'épuration de gaz de fumées selon l'une quelconque des revendications 1 à 4, **caractérisé en ce qu'**en aval selon la technique d'écoulement de l'alimentation en agent à base d'eau de mer quittant la zone de réaction (18), le canal 20 présente une unité de catalyseur.

6. Système d'épuration de gaz de fumées selon la revendication 5, **caractérisé en ce que** l'unité de catalyseur est disposée dans la région de l'évasement en forme de bassin (40).

7. Système d'épuration de gaz de fumées selon l'une quelconque des revendications 1 à 6, **caractérisé en ce qu'**en aval selon la technique d'écoulement de l'alimentation en agent à base d'eau de mer quittant la zone de réaction (18), le canal 20 présente une unité d'amenage d'agent oxydant (32).

8. Système d'épuration de gaz de fumées selon la revendication 7, **caractérisé en ce que** l'unité d'amenage d'agent oxydant (32) est disposée dans la région du fond de l'évasement en forme de bassin (40).

9. Système d'épuration de gaz de fumées selon l'une quelconque des revendications 1 à 8, **caractérisé en ce qu'**en amont selon la technique d'écoulement de l'alimentation en agent à base d'eau de mer quittant la zone de réaction (18), le canal 20 présente des moyens de prélèvement (30) d'eau de mer.

10. Système d'épuration de gaz de fumées selon l'une quelconque des revendications 1 à 9, **caractérisé en ce qu'**en amont selon la technique d'écoulement de l'alimentation en agent à base d'eau de mer quittant la zone de réaction (18), le canal 20 présente des moyens de commande, pour commander l'écoulement dans le canal (20).

11. Système d'épuration de gaz de fumées selon l'une quelconque des revendications 1 à 10, **caractérisé par** un canal d'alimentation (48) d'eau de mer fraîche qui débouche dans le canal (20).

12. Système d'épuration de gaz de fumées selon la revendication 11, **caractérisé en ce que** l'embouchure (50) du canal d'alimentation (48) est disposée dans le canal (20) entre la tour de lavage (12) et l'évasement (40).

13. Système d'épuration de gaz de fumées selon la revendication 11 ou 12, **caractérisé par** des moyens pour la création d'un écoulement à turbulences dans la région de l'embouchure (50).

14. Système d'épuration de gaz de fumées selon l'une quelconque des revendications 1 à 13, **caractérisé par** un canal de dérivation, au moyen duquel à l'avant de la tour de lavage (12) selon la technique d'écoulement, de l'eau de mer peut être dérivée du canal (20) et peut être ramenée au moins en partie selon la technique d'écoulement derrière la tour de lavage (12).

15. Procédé d'exploitation d'un système d'épuration de gaz de fumées (10), un agent à base d'eau de mer étant amené vers une zone de réaction (18) d'une tour de lavage (12) du système d'épuration de gaz de fumées (10) et étant introduit dans les gaz de fumées circulant à travers le système d'épuration de gaz de fumées (10), après avoir quitté la zone de réaction (18), l'agent étant introduit dans un canal (20)) à travers lequel circule de l'eau de mer, disposé en-dessous de la tour de lavage (12).

16. Procédé selon la revendication 15, **caractérisé en ce que** dans la zone de réaction (18), l'agent est entraîné par gravitation.

17. Procédé selon la revendication 15 ou 16, **caractérisé en ce que** le canal (20) est alimenté en eau de mer fraîche.

18. Procédé selon l'une quelconque des revendications 15 à 17, **caractérisé en ce qu'**on utilise en tant qu'agent de l'eau de mer prélevée selon la technique d'écoulement avant l'alimentation en agent à base d'eau de mer quittant la zone de réaction (18).

19. Procédé selon l'une quelconque des revendications 15 à 18, **caractérisé en ce que** dans la région d'introduction de l'agent à base d'eau de mer quittant la zone de réaction (18), on créé un écoulement à turbulences dans l'eau de mer circulant à travers le canal (20).

20. Procédé selon l'une quelconque des revendications 15 à 19, **caractérisé en ce que** selon la technique d'écoulement, après l'introduction de l'agent à base d'eau de mer quittant la zone de réaction (18), on amène dans le canal (20) de l'eau de mer fraîche.

21. Procédé selon la revendication 20, **caractérisé en ce que** l'amenage de l'eau de mer fraîche est commandé.

22. Procédé selon la revendication 20 ou 21, **caractérisé en ce que** par amenage de l'eau de mer fraîche, on règle une valeur pH.

23. Procédé selon l'une quelconque des revendications 20 à 22, **caractérisé en ce que** l'eau de mer soumise à un agent est mélangée à l'eau de mer fraîche.

24. Procédé selon l'une quelconque des revendications 15 à 23, **caractérisé en ce que** l'agent à base d'eau de mer est injecté par buse dans la zone de réaction (18).

25. Procédé selon l'une quelconque des revendications 15 à 24, **caractérisé en ce qu'**en aval selon la technique d'écoulement de l'alimentation de l'agent à base d'eau de mer quittant la zone de réaction (18), on amène un oxydant dans l'eau de mer.

26. Procédé selon la revendication 25, **caractérisé en ce que** l'eau de mer fraîche est amenée selon la technique d'écoulement avant l'oxydant.

27. Procédé selon l'une quelconque des revendications 15 à 26, **caractérisé en ce qu'**en aval selon la technique d'écoulement de l'alimentation de l'agent à base d'eau de mer quittant la zone de réaction (18), on procède à une catalyse dans l'eau de mer.

28. Procédé selon l'une quelconque des revendications 15 à 27, **caractérisé en ce qu'**à partir du canal (20), selon la technique d'écoulement avant la tour de lavage (12), on dérive une partie de l'eau de mer et au moyen d'un canal de dérivation, on la ramène au moins en partie vers le canal (20), selon la technique d'écoulement après la tour de lavage (12).

29. Procédé selon l'une quelconque des revendications 15 à 28, **caractérisé en ce qu'**au moins l'une des étapes du procédé selon l'une quelconque des revendications 15 à 28 est réalisée au moins en partie à l'extérieur de la tour de lavage (12).
